# DEMANDE DE BREVET EUROPEEN

(11) **EP 1 457 811 A1**
(43) Date de publication de la demande: **15.09.2004**
(21) Numéro de dépôt: 03075610.0
(22) Date de dépôt: 28.02.2003
(51) Int. Cl.: G02F 1/1335, G04G 9/06, B60Q 3/04

(54) **Dispositif d'affichage à contraste négatif d'une couleur uniforme, et procédé de fabrication d'un tel dispositif**

(71) Demandeur: EM Microelectronic-Marin SA, 2074 Marin (CH)
(72) Inventeur: Grespan, Silvio, 2072 St-Blaise (CH); Broder, Gary, 2523 Lignières (CH); Vigé, Fabrizio, 2000 Neuchâtel (CH)
(74) Mandataire: Laurent, Jean

(57) **Abrégé**

Le dispositif d'affichage à cristaux liquides à contraste négatif comprend un substrat avant (3) et un substrat arrière (4) fixés l'un à l'autre par au moins un cadre de scellement (7, 7'), une substance à cristaux liquides (6) remplissant l'espace entre les deux substrats et le cadre de scellement, et au moins un polariseur (2, 5) placé sur le substrat avant ou sous le substrat arrière. Le dispositif comprend encore une couche supplémentaire (8) d'une même couleur que le dispositif à l'état inactif vu dans une direction d'observation du dispositif. Cette couche supplémentaire s'étend en regard du cadre de scellement sur une portion d'un des deux substrats de manière à atténuer la visibilité dudit cadre et uniformiser la couleur du dispositif dans la direction d'observation.

Le dispositif d'affichage peut être utilisé comme un cadran d'une montre analogique ou un cadran d'un tableau de bord d'une voiture.

## Description

L'invention concerne un dispositif d'affichage à cristaux liquides à contraste négatif d'une couleur uniforme qui peut être notamment utilisé dans des produits de haut de gamme. Le dispositif comprend notamment un substrat avant et un substrat arrière fixés l'un à l'autre par au moins un cadre de scellement, une substance à cristaux liquides remplissant l'espace entre les deux substrats et le cadre de scellement, et au moins un polariseur placé sur le substrat avant ou sous le substrat arrière.

L'invention concerne également un procédé de fabrication d'un dispositif d'affichage à cristaux liquides à contraste négatif.

Le dispositif peut être utilisé dans différents domaines techniques, tels que par exemple dans l'horlogerie comme un cadran de montre ou dans l'automobile comme un cadran de tableau de bord. Comme ce dispositif est destiné à des produits de haut de gamme, il est primordial de garantir un aspect esthétique irréprochable. Le dispositif d'affichage doit donc être de préférence d'une couleur uniforme dans une direction d'observation dudit dispositif.

Dans ce genre de dispositif d'affichage à contraste négatif, les deux substrats, entre lesquels se trouve la substance à cristaux liquides, sont reliés par au moins un cadre de scellement extérieur. Si ce dispositif d'affichage est utilisé comme un cadran d'une montre analogique, un trou doit être réalisé au centre du dispositif à travers un cadre de scellement intérieur pour le passage des aiguilles d'indication de l'heure. Toutefois, ce cadre de scellement intérieur reste visible, même si ce cadre de scellement est choisi d'une couleur proche de celle du dispositif dans la direction d'observation dudit dispositif. La visibilité de ce cadre de scellement est due notamment à une réaction chimique de la substance à cristaux liquides à proximité dudit cadre qui modifie l'indice de réfraction de la lumière et l'alignement des cristaux liquides (pas de rotation ou "no twist" en terminologie anglaise). De ce fait, la couleur de ce cadre de scellement intérieur apparaît d'une couleur différente de celle du dispositif dans sa direction d'observation ce qui constitue un inconvénient pour une utilisation de ce dispositif dans un produit haut de gamme.

Un objet de la présente invention concerne un dispositif d'affichage à cristaux liquides à contraste négatif ayant des moyens permettant d'atténuer la visibilité du cadre de scellement, afin de pallier les inconvénients de l'art antérieur cité ci-devant.

A cet effet, l'invention concerne un dispositif d'affichage cité ci-devant qui se caractérise en ce qu'il comprend une couche supplémentaire d'une même couleur que le dispositif à l'état inactif vu dans une direction d'observation du dispositif, ladite couche supplémentaire s'étendant en regard du cadre de scellement sur une portion d'un des deux substrats de manière à atténuer la visibilité dudit cadre et uniformiser la couleur du dispositif dans la direction d'observation.

Un avantage du dispositif d'affichage, selon l'invention, est que la couche supplémentaire colorée, qui est placée en regard du cadre de scellement des substrats, permet de rendre uniforme la couleur du dispositif dans un état inactif. La couche supplémentaire s'étend sur au moins un des substrats jusqu'à une zone active du dispositif. La couleur du dispositif vue dans la direction d'observation dudit dispositif est définie par une combinaison de la substance à cristaux liquides et du ou des polariseurs employés.

En ajoutant une telle couche supplémentaire, telle qu'une couche d'encre, cela permet de pouvoir utiliser un tel dispositif dans un produit haut de gamme sans nuire à l'esthétisme dudit produit. La visibilité dudit cadre de scellement sous une lumière directe est ainsi fortement ou totalement atténuée. Une couche supplémentaire peut être placée sur le substrat avant et/ou sur le substrat arrière du côté de la substance à cristaux liquides ou de préférence du côté extérieur des substrats.

Il peut être envisagé d'utiliser ce dispositif d'affichage comme un cadran de montre par exemple. La montre peut être de préférence une montre de type analogique. Dans ce cas, un trou est pratiqué au centre du dispositif à travers un cadre de scellement intérieur pour le passage de l'axe d'entraînement des aiguilles d'indication de l'heure. Comme le cadre de scellement intérieur se trouve directement dans un champ de vision du dispositif, il est donc nécessaire d'atténuer la visibilité de ce cadre par cette couche supplémentaire.

La couleur du dispositif dans la direction d'observation peut être noire, ce qui impose de placer une couche supplémentaire, telle qu'une couche d'encre de couleur noire. Sans cette couche d'encre noire, le cadre de scellement serait vu d'une couleur grise par l'oeil d'un utilisateur du dispositif. L'épaisseur de cette couche d'encre doit être inférieure ou égale à 25 µm. Comme la couche d'encre est placée entre un des substrats et le polariseur fixé sur ce substrat, l'épaisseur de la couche d'encre dépend de l'épaisseur du polariseur. Plus le polariseur est épais et plus l'épaisseur de la couche d'encre est réduite. Ceci permet d'éviter de créer des bulles d'air à proximité d'un coin de la couche d'encre lors de la fixation du polariseur sur le substrat.

Un autre objet de la présente invention concerne un procédé de fabrication d'un dispositif d'affichage à cristaux liquides à contraste négatif ayant des moyens permettant d'atténuer la visibilité du cadre de scellement, afin de pallier les inconvénients de l'art antérieur cité ci-devant.

A cet effet, l'invention concerne un procédé de fabrication d'un dispositif d'affichage à cristaux liquides à contraste négatif, qui comprend les caractéristiques mentionnées dans la revendication 10.

Les buts, avantages et caractéristiques du dispositif d'affichage apparaîtront mieux dans la description suivante de formes d'exécution illustrées par les dessins sur lesquels :
- la figure 1 représente schématiquement une vue en coupe transversale d'une première forme d'exécution du dispositif d'affichage utilisé comme un cadran de montre analogique, selon l'invention;
- la figure 2 montre, dans une vue partielle en coupe, la différence de réflexion de lumière au niveau du cadre de scellement par rapport à une zone active d'un dispositif d'affichage traditionnel sans couche supplémentaire;
- la figure 3 montre, dans une vue partielle en coupe, la réflexion de lumière équivalente au niveau du cadre de scellement par rapport à une zone active du dispositif grâce à une couche supplémentaire selon l'invention;
- la figure 4 montre une coupe transversale de la couche supplémentaire, telle qu'une couche d'encre, d'épaisseur maximale, et
- les figures 5a et 5b représentent schématiquement des vues en coupe transversale d'une seconde forme d'exécution et d'une troisième forme d'exécution du dispositif d'affichage utilisé comme un cadran de montre analogique, selon l'invention.

On va décrire ci-après un mode préféré de réalisation du dispositif d'affichage à cristaux liquides en tant que cadran d'une montre-bracelet de type analogique. Le dispositif d'affichage peut être du type transparent, trans-flectif ou réfléchissant. Bien entendu, les éléments du dispositif d'affichage, qui sont bien connus de l'homme du métier dans ce domaine technique ne seront pas décrits en détail.

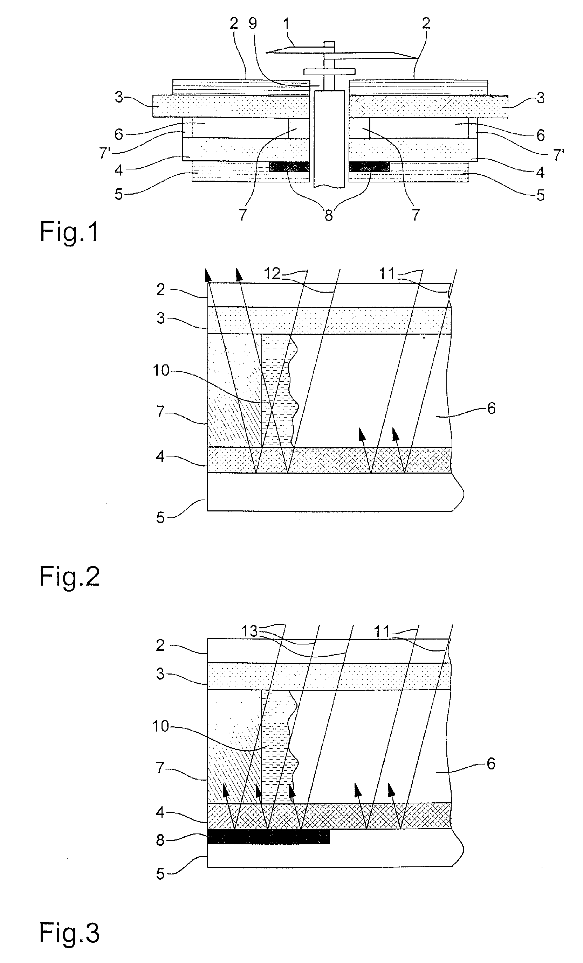

A la figure 1, le dispositif d'affichage à contraste négatif comprend un polariseur avant 2 fixé sur un substrat avant 3, et un polariseur arrière 5 fixé sous un substrat arrière 4. Le substrat avant 3 est relié au substrat arrière 4 par un cadre de scellement extérieur 7' et un cadre de scellement intérieur 7. Une substance à cristaux liquides 6 remplit l'espace entre les substrats et les cadres de scellement.

Le matériau de chaque substrat 3 et 4 peut être du verre ou du plastique, et les polariseurs 2 et 5 sont réalisés de préférence en téréphtalate de polyéthylène (PET).

Comme le dispositif d'affichage définit un cadran de montre, il comprend un trou 9 pratiqué en son centre pour le passage de l'axe d'entraînement des aiguilles 1 d'indication de l'heure de la montre. Le trou 9 est pratiqué dans le dispositif notamment à travers le cadre de scellement intérieur 7. Le cadran de montre peut être de forme circulaire ou ovale ou rectangulaire ou d'une autre forme. De ce fait, les cadres de scellement extérieur 7' et intérieur 7 sont de forme annulaire.

Dans un état inactif, le dispositif d'affichage doit avoir une couleur uniforme vue dans une direction d'observation dudit dispositif. Il est par exemple de couleur noire. La couleur du dispositif à l'état inactif dépend de la combinaison de la substance à cristaux liquides et des polariseurs. Cependant, le cadre de scellement intérieur 7, qui se trouve dans le champ de vision, apparaît d'une couleur différente, par exemple de couleur grise, dans un dispositif traditionnel. Ceci est dû essentiellement à l'indice de réfraction différent et à l'alignement des cristaux liquides (pas de rotation ou "no twist" en terminologie anglaise) à proximité de ce cadre de scellement par rapport à une zone active du dispositif, ainsi qu'à une éventuelle couleur différente du matériau de scellement.

De manière à rendre invisible ou à atténuer fortement la visibilité de ce cadre de scellement intérieur 7, une couche supplémentaire 8, d'une couleur identique à celle du dispositif, est déposée sur le substrat arrière 4 en regard dudit cadre de scellement intérieur 7. Cette couche supplémentaire est de préférence une couche d'encre. Toutefois, il peut être envisagé également de déposer un film de la même couleur que le dispositif sur le substrat arrière 4.

En référence aux figures 2 et 3, il est illustré l'influence d'une couche supplémentaire de couleur identique au dispositif à l'état inactif pour atténuer la visibilité du cadre de scellement intérieur.

La figure 2 montre la différence de réflexion de lumière entre la zone active et la zone du cadre de scellement 7 d'un dispositif traditionnel sans couche supplémentaire. Lorsque le dispositif est exposé à de la lumière directe, on remarque que le faisceau de lumière 11 dans la zone active est réfléchie différemment du faisceau de lumière 12 dans la zone du cadre de scellement. Ainsi, une couleur différente de la zone du cadre de scellement résulte de cette différence de réflexion de lumière, lorsque le dispositif est à l'état inactif. Il est à noter que la visibilité de ce cadre de scellement 7 est due notamment à une réaction chimique 10 de la substance à cristaux liquides 6 à proximité dudit cadre 7. Cette réaction chimique 10 de la zone du cadre modifie l'indice de réfraction de la lumière par rapport à l'indice de réfraction de la zone active. Si la majeure partie du dispositif à l'état inactif est de couleur noire, le cadre de scellement 7 apparaît de couleur grise, alors que le pourtour dudit cadre apparaît légèrement d'une couleur jaune.

La figure 3 montre une réflexion de lumière équivalente dans la zone active et dans la zone du cadre de scellement 7 du dispositif selon l'invention avec une couche supplémentaire, telle qu'une couche d'encre 8. Cette couche d'encre 8 est déposée sur le substrat arrière 4 en regard dudit cadre de scellement 7. Les faisceaux de lumière 11 et 13 sont réfléchis de la même façon dans la zone active et dans la zone du cadre de scellement grâce au dépôt de la couche d'encre 8. De ce fait, aucune différence de couleur n'est constatée sur le dispositif ce qui procure une couleur uniforme du dispositif dans la direction d'observation du dispositif.

Pour réaliser le dispositif d'affichage à cristaux liquides montré en figure 1, les deux substrats 3 et 4 sont tout d'abord reliés l'un à l'autre par les deux cadres de scellement 7 et 7'. Ensuite, la substance à cristaux liquides 6 est introduite dans l'espace créé par les substrats et les cadres de scellement. De la colle sensible aux rayons UV vient obturer l'ouverture de remplissage de la substance à cristaux liquides d'un des cadres de scellement. Une fois cette étape terminée, un trou 9 est pratiqué au centre du dispositif à travers le cadre de scellement intérieur 7. La couche d'encre 8, par exemple de couleur noire comme le dispositif, est déposée en regard du cadre de scellement intérieur 7 sur le substrat arrière 4. Depuis le bord du trou 9, la couche d'encre 8 s'étend du côté de la substance à cristaux liquides 6 jusqu'au niveau de la zone active du dispositif. Finalement, le polariseur avant 2 est fixé sur le substrat avant 3 et le polariseur arrière 5 est fixé sous le substrat arrière 4 en recouvrant la couche d'encre 8 tout en gardant le trou 9 libre pour le passage de l'axe des aiguilles.

On comprend donc que la couche d'encre 8 ne doit pas s'étendre dans la zone active du dispositif pour que le polariseur arrière 5 puisse remplir son rôle lors du fonctionnement dudit dispositif. Cette zone active est définie par des réseaux d'électrodes transparentes, non représentés sur la figure 1, qui sont disposés chacun sur un substrat correspondant du côté de la substance à cristaux liquides 6.

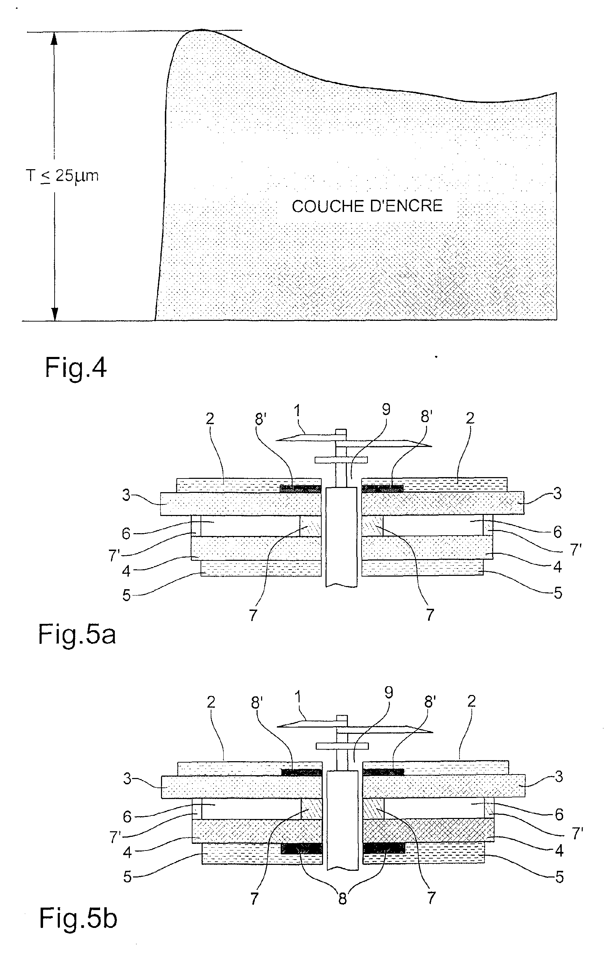

Comme montré de manière simplifiée à la figure 4, l'épaisseur de la couche d'encre doit être inférieure à 25 µm. Ceci permet d'éviter de créer des bulles d'air à proximité d'un coin de la couche d'encre pendant l'étape de collage du polariseur arrière sur le substrat arrière. Cette épaisseur de la couche d'encre doit être optimisée en fonction de l'épaisseur du film polariseur. Si le polariseur est rigide et d'une épaisseur de l'ordre de 300 µm ou plus, une fine couche d'encre par exemple de l'ordre 5 µm doit être déposée. Par contre si le polariseur est souple et d'une épaisseur de l'ordre de 75 à 100 µm, il est possible de déposer une couche d'encre épaisse plus petite ou égale à 25 µm.

Les figures 5a et 5b montrent deux autres formes d'exécution du dispositif d'affichage à cristaux liquides à contraste négatif. Il est à noter que les éléments de ces figures, qui correspondent à ceux de la figure 1, portent des signes de référence identiques. Comme plusieurs éléments de ces deux autres formes d'exécution du dispositif sont identiques à ceux décrits ci-devant, uniquement les différences de chaque dispositif sont expliquées ci-après.

A la figure 5a, la couche d'encre 8' est déposée sur le substrat avant en regard du cadre de scellement intérieur 7. Le polariseur avant 2 est fixé sur le substrat avant 3 et recouvre la couche d'encre 8'. Comme expliqué ci-dessus, l'épaisseur de la couche d'encre 8' dépend de l'épaisseur du polariseur avant.

A la figure 5b, une première couche d'encre 8' est déposée sur le substrat avant en regard du cadre de scellement intérieur 7, et une seconde couche d'encre 8 est déposée sur le substrat arrière 4 également en regard du cadre de scellement. L'épaisseur de chaque couche d'encre peut bien évidemment être différente puisqu'elle dépend de l'épaisseur du polariseur.

A partir de la description qui vient d'être faite, de multiples variantes de réalisation du dispositif d'affichage à cristaux liquides peuvent être conçues par l'homme du métier sans sortir du cadre de l'invention. Il peut être encore prévu que la couche supplémentaire, telle qu'un film ou une couche d'encre, soit déposée du côté de la substance à cristaux liquides. Une couche supplémentaire peut être déposée sur au moins un des substrats également en regard du cadre de scellement extérieur. Selon le type de technologie employée pour réaliser le dispositif d'affichage, un seul polariseur peut suffire. Ainsi, la couche supplémentaire est de préférence placée entre l'unique polariseur et le substrat sur lequel le polariseur est fixé. Chaque dispositif, vu dans une direction d'observation, peut être de tout type de couleur foncée, par exemple selon un niveau de gris déterminé ou autre. Le dispositif d'affichage peut être utilisé dans plusieurs domaines techniques autres que l'horlogerie et l'automobile, notamment pour un produit de luxe.

## Revendications

1. Dispositif d'affichage à cristaux liquides à contraste négatif comprenant un substrat avant (3) et un substrat arrière (4) fixés l'un à l'autre par au moins un cadre de scellement (7, 7'), une substance à cristaux liquides (6) remplissant l'espace entre les deux substrats et le cadre de scellement, et au moins un polariseur (2, 5) placé sur le substrat avant ou sous le substrat arrière, **caractérisé en ce que** le dispositif comprend une couche supplémentaire (8, 8') d'une même couleur que le dispositif à l'état inactif vu dans une direction d'observation du dispositif, ladite couche supplémentaire s'étendant en regard du cadre de scellement sur une portion d'un des deux substrats de manière à atténuer la visibilité dudit cadre et uniformiser la couleur du dispositif dans la direction d'observation.

2. Dispositif d'affichage selon la revendication 1, **caractérisé en ce que** la couche supplémentaire est une couche d'encre.

3. Dispositif d'affichage selon la revendication 2, **caractérisé en ce que** la couche d'encre est de couleur noire comme la couleur du dispositif vu dans une direction d'observation du dispositif.

4. Dispositif d'affichage selon la revendication 1, comprenant un polariseur avant (2) fixé sur le substrat avant (3) et un polariseur arrière (5) fixé sous le substrat arrière (4), **caractérisé en ce que** la couche supplémentaire (8, 8') est placée entre le substrat arrière et le polariseur arrière ou entre le substrat avant et le polariseur avant, ladite couche étant de largeur égale à la largeur du cadre de scellement ou supérieure à la largeur du cadre de scellement de manière à s'étendre partiellement du côté de la substance à cristaux liquides jusqu'à une zone active du dispositif.

5. Dispositif d'affichage selon la revendication 1, **caractérisé en ce qu'**il définit un cadran de montre, **en ce qu'**il comprend un cadre de scellement extérieur (7') et un cadre de scellement intérieur (7), un trou étant pratiqué à travers le dispositif à l'intérieur du cadre de scellement intérieur de manière à permettre le passage d'aiguilles (1) d'indication de l'heure d'une montre, et **en ce que** la couche supplémentaire est placée en regard du cadre de scellement intérieur et en s'étendant du côté de la substance à cristaux liquides.

6. Dispositif d'affichage selon la revendication 5, dans lequel un réseau d'électrodes transparentes est disposé sur chaque substrat, une extrémité de chaque réseau étant espacée d'une distance déterminée du cadre de scellement intérieur,
**caractérisé en ce que** le cadre de scellement intérieur est de forme annulaire, et **en ce que** la couche supplémentaire, telle qu'une couche d'encre, est également de forme annulaire s'étendant sur un des substrats depuis le bord du trou du dispositif à une distance inférieure ou égale à la distance séparant le cadre de scellement intérieur de l'extrémité de chaque réseau d'électrodes.

7. Dispositif d'affichage selon la revendication 1, comprenant un polariseur avant (2) fixé sur le substrat avant (3) et un polariseur arrière (5) fixé sous le substrat arrière (4), **caractérisé en ce qu'**une première couche supplémentaire (8) est placée en regard du cadre de scellement entre le substrat arrière et le polariseur arrière, et **en ce qu'**une seconde couche supplémentaire (8') est placée en regard du cadre de scellement entre le substrat avant et le polariseur avant, chaque couche étant de largeur égale à la largeur du cadre de scellement ou supérieure à la largeur du cadre de scellement de manière à s'étendre partiellement du côté de la substance à cristaux liquides jusqu'à une zone active du dispositif.

8. Dispositif d'affichage selon l'une des revendications précédentes,
**caractérisé en ce que** le matériau de chaque substrat est du verre ou du plastique, et **en ce que** le polariseur est de type réflectif, transflectif ou transparent.

9. Dispositif d'affichage selon la revendication 1, **caractérisé en ce que** la couche supplémentaire, tel qu'une couche d'encre a une épaisseur inférieure ou égale à 25 *µ*m.

10. Procédé de fabrication d'un dispositif d'affichage selon l'une des revendications précédentes, comprenant une première série d'étapes consistant à :
- fixer deux substrats (3, 4) espacés par un cadre de scellement extérieur (7') et un cadre de scellement intérieur (7);
- remplir l'espace entre les substrats et les cadres de scellement par une substance à cristaux liquides (6) à travers une ouverture d'un des cadres de scellement, et
- fermer l'ouverture du cadre de scellement;
**caractérisé en ce qu'**il comprend une seconde série d'étapes consistant à
- pratiquer un trou dans le dispositif à travers le cadre de scellement intérieur;
- déposer une couche supplémentaire (8, 8') en regard du cadre de scellement intérieur (7) sur une portion d'un des substrats, la couleur de la couche étant identique à celle du dispositif à l'état inactif, et
- fixer au moins un polariseur (2, 5) sur le substrat ayant la couche supplémentaire de manière à couvrir ladite couche supplémentaire.
